# EUROPEAN PATENT APPLICATION

(11) **EP 4 567 975 A1**
(43) Date of publication of application: **11.06.2025**
(21) Application number: 23887879.7
(22) Date of filing: 31.10.2023
(51) Int. Cl.: H01M 50/10, H01M 50/186, H01M 50/50, H01M 50/59, H01M 10/052, H01M 10/058

(54) **BATTERY PACK AND CHARGING COMBINATION**

(30) Priority: 07.11.2022 CN 202211381365; 25.10.2023 CN 202311399295; 25.10.2023 CN 202311399271
(71) Applicant: Nanjing Chervon Industry Co., Ltd., Nanjing, Jiangsu 211106 (CN)
(72) Inventor: YANG, Dezhong, Nanjing, Jiangsu 211106 (CN); SONG, Xiangjun, Nanjing, Jiangsu 211106 (CN); DONG, Zhijun, Nanjing, Jiangsu 211106 (CN)
(74) Representative: Sun, Yiming
(86) International application number: PCT/CN2023/128646
(87) International publication number: WO 2024/099189

(57) **Abstract**

Provided are a battery pack configured to power a power tool and a charging combination. The battery pack includes a housing; and a cell assembly disposed in the housing and including at least one cell unit; where a cell unit of the at least one cell unit includes at least one charged surface to which a surfactant is attached. According to the above technical solutions, the battery pack can have good insulation, a strong anti-rust ability, and high safety performance between a positive electrode and a negative electrode.

## Description

This application claims priority to Chinese Patent Application No. 202211381365.4 filed with the China National Intellectual Property Administration (CNIPA) on Nov. 7, 2022, Chinese Patent Application No. 202311399295.X filed with the CNIPA on Oct. 25, 2023, and Chinese Patent Application No. 202311399271.4 filed with the CNIPA on Oct. 25, 2023, the disclosures of which are incorporated herein by reference in their entireties.

### TECHNICAL FIELD

The present application relates to the technical field of battery packs and, in particular, to a battery pack configured to power a power tool and a charging combination.

### BACKGROUND

In the related art, power tools are generally powered by external mains electricity connected via wires or powered by battery packs of the power tools. Compared with the external mains electricity connected via the wires, the battery packs are portable and can move without being limited by the lengths of the wires. Therefore, most power tools are powered by battery packs. Multiple cell units are arranged in a battery pack. Since the positive electrode and the negative electrode of a cell unit are relatively close to each other, moisture or water between the positive electrode and the negative electrode results in electricity conduction and then a hydrolysis reaction occurs and heat is generated. The accumulation of heat causes an increase in the temperature of the cell.

This part provides background information related to the present application, and the background information is not necessarily the related art.

### SUMMARY

An object of the present application is to solve or at least alleviate part or all of the preceding problems. Therefore, an object of the present application is to provide a battery pack with good insulation, a strong anti-rust ability, and high safety performance between a positive electrode and a negative electrode of the battery pack.

To achieve the preceding object, the present application adopts the technical solutions below.

A battery pack configured to be capable of powering at least a power tool includes a housing and a cell assembly disposed in the housing and including at least one cell unit. A cell unit of the at least one cell unit includes at least one charged surface to which a surfactant is attached.

In some examples, the cell unit includes a positive electrode assembly, a negative electrode assembly, and a safety device electrically connected to the positive electrode assembly; and the safety device is capable of being electrically disconnected from the positive electrode assembly when the cell unit is abnormal.

In some examples, the at least one charged surface includes at least one of a surface of the positive electrode assembly, a surface of the negative electrode assembly, and a surface of the safety device.

In some examples, the surfactant includes hard film rust preventive oil.

In some examples, the hard film rust preventive oil includes sodium petroleum sulfonate or barium dinonylnaphthalene sulfonate.

In some examples, the cell unit is configured to be immersed in the surfactant so that the surfactant is attachable to the at least one charged surface.

In some examples, the cell unit is configured to be processed through vapor deposition so that the surfactant is attachable to the at least one charged surface.

In some examples, the cell unit further includes a sealing ring, and the sealing ring is at least partially disposed between the positive electrode assembly and the negative electrode assembly.

In some examples, the sealing ring is formed with or connected to a partition, and the partition is connected to at least the positive electrode assembly and the negative electrode assembly.

In some examples, the partition includes at least one material of hard film rust preventive oil, an electrical coating, mono-component transparent silica gel, or fluororubber.

In some examples, the partition is capable of undergoing reversible elastic deformation.

In some examples, the partition is integrally formed with the sealing ring.

In some examples, the cell unit is a cylindrical cell, and the nominal voltage of the cell unit is lower than or equal to 4.2 V.

In some examples, the battery pack is detachably mounted to the power tool.

In some examples, the battery pack includes a lithium chemistry battery, a nickel-cadmium battery, or a nickel metal hydride battery.

A charging combination includes a charger and a battery pack detachably mounted to the charger to acquire electrical energy. The battery pack is configured to be detachably connectable to a power tool to provide electrical energy for the power tool. The battery pack includes a housing and a cell assembly disposed in the housing and including at least one cell unit. A cell unit of the at least one cell unit includes at least one charged surface including a surfactant.

A battery pack configured to be capable of powering at least a power tool includes a housing and a cell assembly disposed in the housing and including at least one cell unit. A cell unit of the at least one cell unit includes a positive electrode assembly, a negative electrode assembly, and a sealing ring at least partially disposed between the positive electrode assembly and the negative electrode assembly. The sealing ring is formed with or connected to a partition, and the partition is connected to at least the positive electrode assembly and the negative electrode assembly.

In some examples, the partition includes at least one material of hard film rust preventive oil, an electrical coating, mono-component transparent silica gel, or fluororubber.

In some examples, the partition is capable of undergoing reversible elastic deformation.

In some examples, the partition is integrally formed with the sealing ring.

### BRIEF DESCRIPTION OF DRAWINGS

FIG. 1 is a perspective view of a power tool according to an example of the present application.
FIG. 2 is a perspective view of a charging combination according to an example of the present application.
FIG. 3 is a perspective view of a battery pack according to an example of the present application.
FIG. 4 is an exploded view of the battery pack of FIG. 3.
FIG. 5 is a perspective view of a cell unit in FIG. 4.
FIG. 6 is an exploded view of the cell unit of FIG. 5.
FIG. 7 is a partial sectional view of the cell unit of FIG. 5.
FIG. 8 is a partial sectional view of a cell unit according to an example of the present application.
FIG. 9 is a partial sectional view of the cell unit of FIG. 8.
FIG. 10 is a partial sectional view of a cell unit according to another example of the present application.
FIG. 11 is a partial sectional view of the cell unit of FIG. 10.
FIG. 12 is a partial sectional view of a cell unit according to another example of the present application.
FIG. 13 is a partial sectional view of a cell unit according to another example of the present application.
FIG. 14 is a processing schematic illustrating that cell units are immersed in a selected surfactant according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" " and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

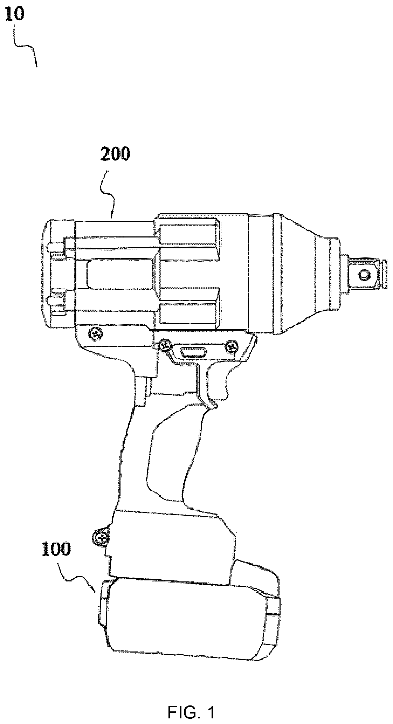

FIG. 1 shows a power tool 10 as a specific example of the present application. The power tool is specifically an electric drill that can at least provide torque to assist a screw into a workpiece and provide an impact force and perform an impact operation to satisfy different use requirements of a user. In fact, the technical solutions of the present application are applicable to handheld power tools such as an electric drill, an electric wrench, an electric screwdriver, an electric hammer drill, an electric circular saw, and a sander, table power tools such as a table saw, and outdoor tools such as a mower, a string trimmer, electric shears, a hedge trimmer, and an electric saw. The following examples are part, not all, of examples of the present application.

The present application is described below in detail in conjunction with drawings and examples.

As shown in FIG. 1, the power tool 10 includes a tool body 200 and a battery pack 100 for providing electrical energy for the tool body 200. In some examples, the battery pack 100 is detachably connected to the tool body 200 to provide the electrical energy for the power tool 10. In some examples, the battery pack 100 is built into the tool body 200 to provide the electrical energy for the power tool 10. In some examples, the battery pack 100 is a rechargeable lithium chemistry battery, such as a lithium-ion battery. Depending on different scenarios where the power tool 10 is used, the battery pack 100 may be a cylindrical lithium-ion battery or a pouch cell. Of course, the rechargeable battery pack 100 may be configured to be another lithium chemistry battery with a lithium matrix or a rechargeable battery with another chemical matrix such as nickel cadmium and nickel metal hydride. The battery pack 100 may be in the shape of, for example, but not limited to, a square, a cylinder, or a tower.

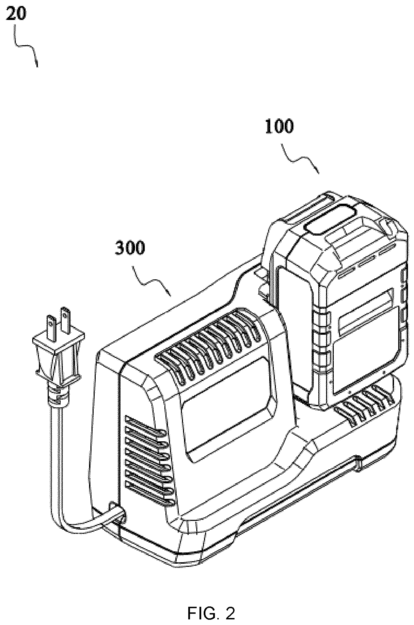

FIG. 2 shows a charging combination 20 as a specific example of the present application. The charging combination 20 includes the battery pack 100 and a charger 300 for charging the battery pack 100. The battery pack 100 is detachably connected to the charger 300 to acquire electrical energy from the charger 300 and store the electrical energy.

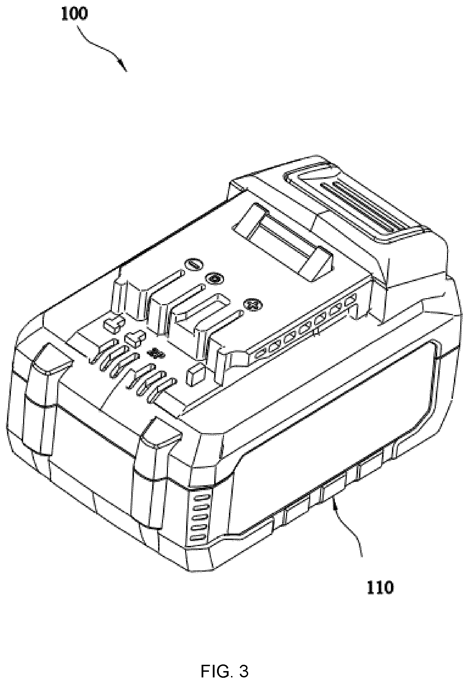

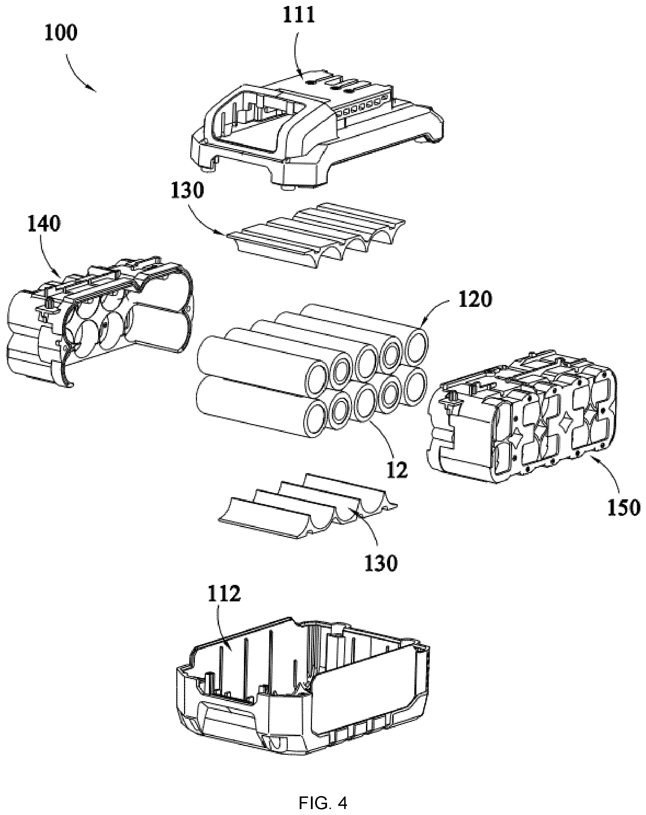

In some examples, as shown in FIGS. 3 and 4, the battery pack 100 includes a housing 110, a cell assembly 120, a heat absorber 130, and a first limiting frame 140 and a second limiting frame 150 for securing the cell assembly 120. The housing 110 forms an accommodation cavity, and the cell assembly 120 and the heat absorber 130 are disposed in the accommodation cavity. In some examples, the housing 110 includes an upper housing 111 and a lower housing 112 forming the accommodation cavity. The heat absorber 130 is in thermal contact with the cell assembly 120 to absorb heat generated by the cell assembly 120 during charging and discharging of the battery pack 100. The cell assembly 120 includes at least one cell unit 12 for storing electrical energy. Specifically, the number of cell units 12 depends on different nominal ratings of the battery pack 100. Multiple rechargeable cell units 12 are connected in series so that battery packs with different nominal values can be achieved. In some examples, the nominal voltage of the cell unit 12 is lower than or equal to 4.2 V.

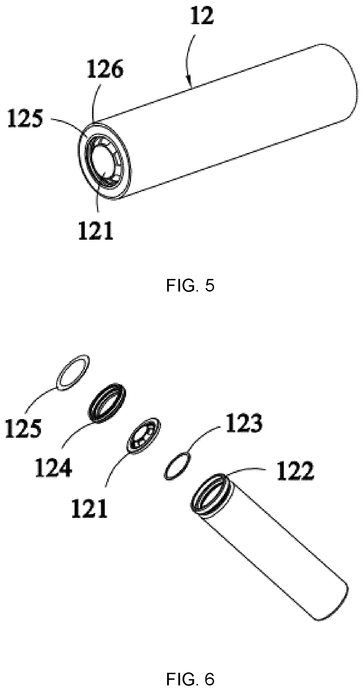

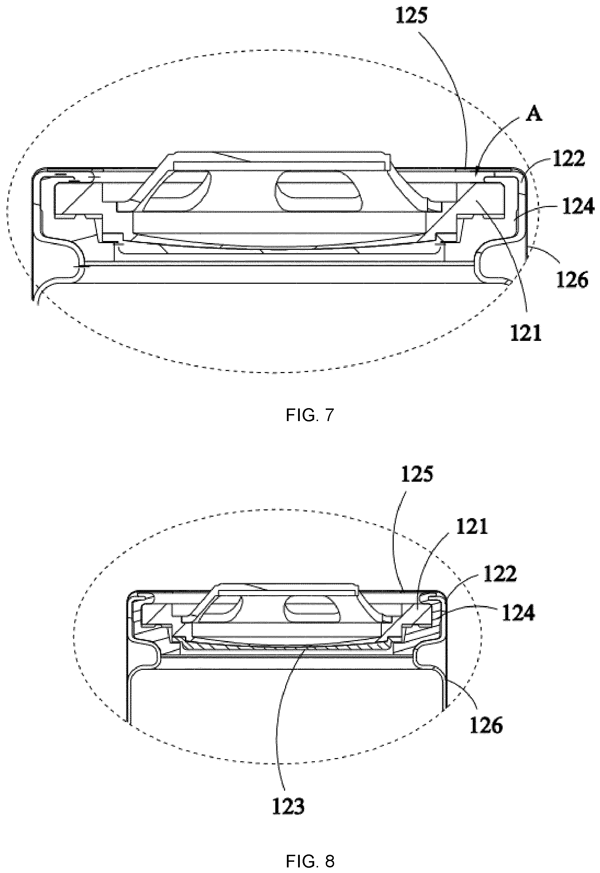

In some examples, as shown in FIGS. 5 and 6, the cell unit 12 includes a positive electrode assembly 121, a negative electrode assembly 122, and a safety device 123 electrically connected to the positive electrode assembly 121. The safety device 123 can be electrically disconnected from the positive electrode assembly 121 when the cell unit 12 is abnormal. In some examples, the cell unit 12 further includes a sealing ring 124, an insulating sheet 125, and an insulating sheath 126 wrapped around the outer side of the negative electrode assembly 122. Specifically, the sealing ring 124 is disposed between the positive electrode assembly 121 and the negative electrode assembly 122 to prevent a short circuit between the positive electrode assembly 121 and the negative electrode assembly 122. When the cell unit 12 is in a relatively humid environment or water vapor enters the cell unit 12, a short circuit between the positive electrode assembly 121 and the negative electrode assembly 122 easily occurs at position A in FIG. 7. It is to be understood that when the performance of an insulating material is degraded, due to external factors such as weather, for example, high air humidity, successive overcast days, the plum rain season, and a humid environment, ripple-like electric arcs creep on the outer surfaces of a charged metal component and the insulating material, that is, creepage occurs. Due to creepage, the short circuit occurs between the positive electrode assembly 121 and the negative electrode assembly 122 of the cell unit 12, affecting the normal use of the battery and even causing safety risks. To solve the above problem, the present application provides some implementable technical solutions mainly to prevent the short circuit between the positive electrode assembly 121 and the negative electrode assembly 122 due to the creepage or water exposure. To solve the above problem, in the present application, the sealing ring is formed with or connected to a partition, and the partition is connected to at least the positive electrode assembly and the negative electrode assembly to block an air communication path between the positive electrode assembly and the negative electrode assembly. Since the partition is made of a material with relatively good insulation, the creepage distance between positive and negative electrodes is increased, and the insulation between the positive and negative electrodes is improved.

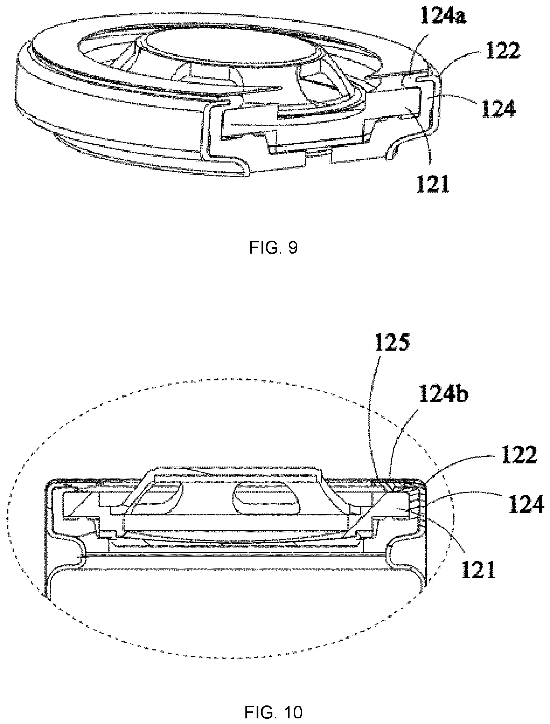

In some examples, as shown in FIGS. 8 and 9, the sealing ring 124 is formed with or connected to a partition 124a, and the partition 124a abuts against the insulating sheet 125 to completely isolate the positive electrode assembly 121 from the negative electrode assembly 122 so that no air communication path exists between the positive electrode assembly and the negative electrode assembly. Specifically, the partition 124a is integrally formed with the sealing ring.

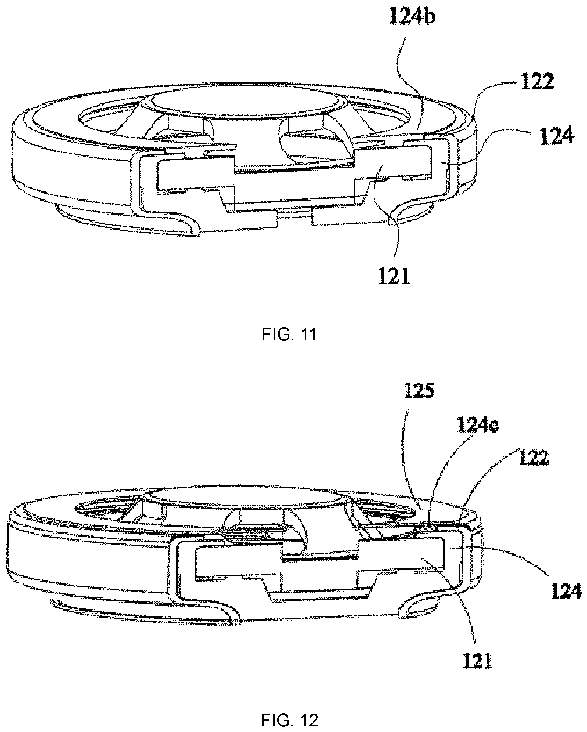

In some examples, as shown in FIGS. 10 and 11, different from the preceding example, this solution has a second sealing ring 124b added. Specifically, the second sealing ring 124b abuts against the sealing ring 124 and is disposed between the insulating sheet 125 and the positive electrode assembly 121 to completely isolate the positive electrode assembly 121 from the negative electrode assembly 122, thereby preventing the short circuit between the positive electrode assembly 121 and the negative electrode assembly 122 of the cell unit 12. The second sealing ring 124b may be understood as the partition. In some examples, the sealing ring 124 is integrally formed with the second sealing ring 124b. In some examples, the sealing ring 124 and the second sealing ring 124b are made of the same material such as polybutylene terephthalate (PBT). The sealing ring made of PBT has relatively good insulation, heat resistance, oxidation resistance, oil resistance, corrosion resistance, and atmospheric aging resistance. Of course, those skilled in the art may make the sealing ring 124 and the second sealing ring 124b of different materials, such as fluororubber.

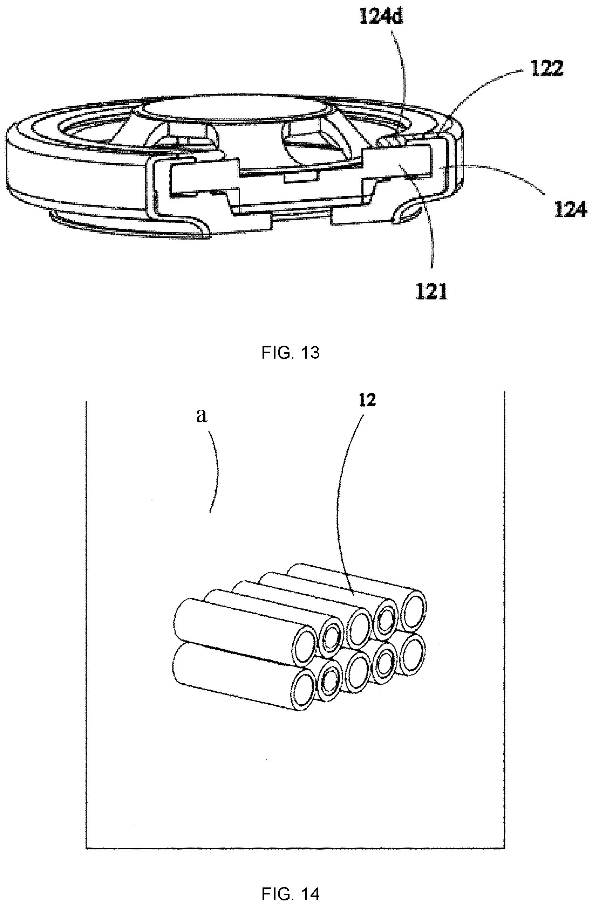

In some examples, as shown in FIG. 12, this example is different from the preceding examples in that in this example, an insulating varnish 124c such as hard film rust preventive oil or an electrical coating is sprayed on a surface of the positive electrode assembly 121, a surface of the sealing ring 124, and a surface of the negative electrode assembly 122. Of course, as shown in FIG. 13, an insulating adhesive 124d is coated on the surface of the positive electrode assembly 121, the surface of the sealing ring 124, and the surface of the negative electrode assembly 122. The insulating adhesive 124d includes mono-component transparent silica gel. It is to be understood that the insulating varnish should be understood as the partition.

In some examples, the cell unit 12 includes a charged surface to which a surfactant is attached. The charged surface may be understood as a metal surface of the cell unit 12 exposed to the air. Specifically, the charged surface includes at least one of a surface of the positive electrode assembly 121, a surface of the negative electrode assembly 122, and a surface of the safety device. Specifically, the molecular structure of the surfactant is amphiphilic: a hydrophilic group at one end and a hydrophobic group at the other end. When the surfactant is attached to the charged surface, the hydrophilic group is attached closer to the charged surface than the hydrophobic group. In some examples, the surfactant is a cationic surfactant. In some examples, the surfactant includes hard film rust preventive oil. In some examples, the surfactant includes sodium petroleum sulfonate. In some examples, the surfactant includes barium dinonylnaphthalene sulfonate. It is to be noted that some surfactants are illustrated above, and those skilled in the art can adopt other forms of surfactants to prevent the short circuit between the positive electrode assembly 121 and the negative electrode assembly 122 of the cell unit 12 in the humid environment.

In some examples, as shown in FIG. 14, the cell unit 12 is immersed in a selected surfactant a so that the surfactant can be fully attached to the charged surface. Of course, in some examples, the selected surfactant is attached to the charged surface of the cell unit in a processing manner of vapor deposition.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A battery pack configured to power at least a power tool, comprising:
a housing; and
a cell assembly disposed in the housing and comprising at least one cell unit;
wherein a cell unit of the at least one cell unit comprises at least one charged surface having a surfactant.

2. The battery pack according to claim 1, wherein the cell unit comprises a positive electrode assembly, a negative electrode assembly, and a safety device electrically connected to the positive electrode assembly; and the safety device is capable of being electrically disconnected from the positive electrode assembly when the cell unit is abnormal.

3. The battery pack according to claim 2, wherein the at least one charged surface comprises at least one of a surface of the positive electrode assembly, a surface of the negative electrode assembly, and a surface of the safety device.

4. The battery pack according to claim 1, wherein the surfactant comprises hard film rust preventive oil.

5. The battery pack according to claim 4, wherein the hard film rust preventive oil comprises sodium petroleum sulfonate or barium dinonylnaphthalene sulfonate.

6. The battery pack according to claim 1, wherein the cell unit is configured to be immersed in the surfactant so that the surfactant is attachable to the at least one charged surface.

7. The battery pack according to claim 1, wherein the cell unit is configured to be processed through vapor deposition so that the surfactant is attachable to the at least one charged surface.

8. The battery pack according to claim 1, wherein the cell unit further comprises a sealing ring, and the sealing ring is at least partially disposed between the positive electrode assembly and the negative electrode assembly.

9. The battery pack according to claim 8, wherein the sealing ring is formed with or connected to a partition, and the partition is connected to at least the positive electrode assembly and the negative electrode assembly to block an air communication path between the positive electrode assembly and the negative electrode assembly.

10. The battery pack according to claim 9, wherein the partition comprises at least one material of hard film rust preventive oil, an electrical coating, mono-component transparent silica gel, or fluororubber.

11. The battery pack according to claim 9, wherein the partition is capable of undergoing reversible elastic deformation.

12. The battery pack according to claim 9, wherein the partition is integrally formed with the sealing ring.

13. The battery pack according to claim 1, wherein the cell unit is a cylindrical cell, and a nominal voltage of the cell unit is lower than or equal to 4.2 V.

14. The battery pack according to claim 1, wherein the battery pack is detachably mounted to the power tool.

15. The battery pack according to claim 1, wherein the battery pack comprises a lithium chemistry battery, a nickel-cadmium battery, or a nickel metal hydride battery.

16. A charging combination, comprising a charger and a battery pack detachably mounted to the charger to acquire electrical energy, wherein the battery pack is configured to be detachably connectable to a power tool to provide electrical energy for the power tool, and the battery pack comprises:
a housing; and
a cell assembly disposed in the housing and comprising at least one cell unit;
wherein a cell unit of the at least one cell unit comprises at least one charged surface comprising a surfactant.

17. A battery pack configured to be capable of powering at least a power tool, comprising:
a housing; and
a cell assembly disposed in the housing and comprising at least one cell unit;
wherein a cell unit of the at least one cell unit comprises a positive electrode assembly, a negative electrode assembly, and a sealing ring at least partially disposed between the positive electrode assembly and the negative electrode assembly; and
the sealing ring is formed with or connected to a partition, and the partition is connected to at least the positive electrode assembly and the negative electrode assembly to block an air communication path between the positive electrode assembly and the negative electrode assembly.

18. The battery pack according to claim 17, wherein the partition comprises at least one material of hard film rust preventive oil, an electrical coating, mono-component transparent silica gel, or fluororubber.

19. The battery pack according to claim 17, wherein the partition is capable of undergoing reversible elastic deformation.

20. The battery pack according to claim 17, wherein the partition is integrally formed with the sealing ring.
